(19) Europäisches Patentamt
European Patent Office
Office européen des brevets

(11) **EP 2 950 434 A1**

(12) **EUROPEAN PATENT APPLICATION**

(43) Date of publication:
**02.12.2015 Bulletin 2015/49**

(51) Int Cl.:
*H02M 1/12* (2006.01)      *H02M 7/493* (2007.01)
*H02M 1/00* (2007.01)

(21) Application number: **15169118.5**

(22) Date of filing: **26.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **30.05.2014  US 201414291908**

(71) Applicant: **Hamilton Sundstrand Corporation
Windsor Locks, CT 06096-1010 (US)**

(72) Inventors:
• **Jiang, Dong
  Manchester, CT 06042 (US)**
• **Shen, Miaosen
  Vernon, CT 06066 (US)**

(74) Representative: **Iceton, Greg James
Dehns
St Bride's House
10 Salisbury Square
London EC4Y 8JD (GB)**

(54) **OUTPUT FILTER WITH INTERPHASE REACTOR FOR PARALLELED INVERTERS**

(57)     A power conversion system includes a paralleled inverter (10) and a plurality of coupling inductors (14). The paralleled inverter (10) is configured to convert a direct current input into an alternating current output and includes a first inverter (12a) having a first plurality of phase outputs and a second inverter (12b) having a second plurality of phase outputs, which may achieve negligible common-mode output voltage. The plurality of coupling inductors (14) connect one of the first plurality of phase outputs with one of the second phase outputs to filter differential-mode electromagnetic interference and circulation current.

FIG. 1

FIG. 2A

**Description**

BACKGROUND

The present invention relates generally to power inverters, and in particular to a system and method for controlling paralleled inverters using pulse-width modulation (PWM).

Three-phase inverters are often implemented within, for example, variable speed motor drives. Three-phase inverters are utilized, for example, to convert a direct current (DC) input into an alternating current (AC) output for a motor or other load that utilizes AC power. Prior art inverters were implemented as single stage inverters having a plurality of switches. The switches are selectively enabled and disabled to convert the DC input power into controlled AC output power.

Electromagnetic interference, or "noise," is a common problem in electrical circuit design. Noise may originate from natural sources, such as background radiation or lightning strikes, but the more common and more problematic noise is electromagnetic noise generated by components in electrical systems, such as three-phase inverters. EMI noise can be divided into two major groups: differential-mode (DM) EMI and common-mode (CM) EMI. CM noise creates several concerns such as conduction through bearings in the motor which may reduce the reliability of the motor. In prior art systems, CM filters containing, for example, CM chokes and CM capacitors are utilized to filter the CM noise. The weight of CM filters is dependent upon the CM voltage of the inverter. Different PWM schemes for inverter control can generate different CM voltage, but CM voltage cannot be eliminated for prior art two-level inverters. It is desirable to eliminate the CM output voltage of the inverter to eliminate the need for CM filters.

SUMMARY

A power conversion system (claim 1) includes a paralleled inverter and a plurality of coupling inductors. The paralleled inverter is configured to convert a direct current input into an alternating current output and includes a first inverter having a first plurality of phase outputs and a second inverter having a second plurality of phase outputs. The plurality of coupling inductors connect one of the first plurality of phase outputs with one of the second phase outputs to filter differential-mode electromagnetic interference and circulation current.

BRIEF DESCRIPTION OF THE DRAWINGS

FIG. 1 is a circuit diagram illustrating a paralleled inverter that includes two inverters.
FIGS. 2A and 2B are vector diagrams illustrating control vectors for a paralleled invertor.
FIG. 3 is a chart illustrating gate pulse generation for a switching cycle of a paralleled inverter.
FIG. 4 is a block diagram illustrating a pulse-width modulation control system for a paralleled inverter.
FIG. 5 is a schematic diagram illustrating a coupling inductor for use in an output of a paralleled invertor.

DETAILED DESCRIPTION

A power conversion system is disclosed herein that includes parallel inverters for producing zero common-mode (CM) voltage output. A controller controls the paralleled inverter using six unit vectors. Each unit vector, when utilized to control the paralleled inverter, provides negligible CM voltage at the paralleled inverter output. Because of this, no CM filter is required, reducing the overall weight and cost of the power conversion system. An output filter that includes coupling inductors is configured to filter differential-mode (DM) electromagnetic interference (EMI). The coupling inductors both constrain the circulation current from the paralleled inverter as well as filter the DM voltage.

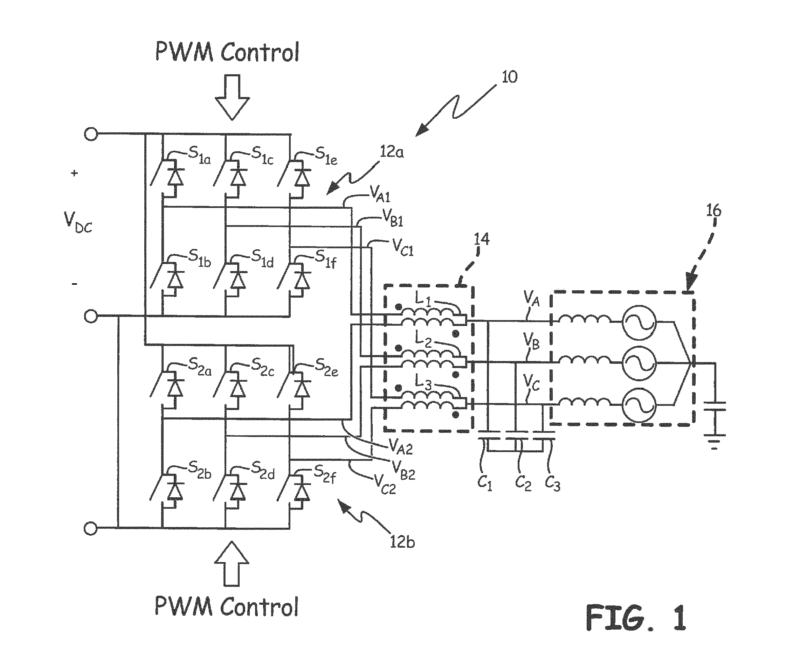

FIG. 1 is a circuit diagram illustrating paralleled inverter 10 that includes inverters 12a and 12b. Inverter 12a includes switches $S_{1a}$-$S_{1f}$ and inverter 12b includes switches $S_{2a}$-$S_{2f}$. The three phase outputs from inverters 12a and 12b are provided to coupling inductors 14 that include inductors $L_1$-$L_3$. Capacitors $C_1$-$C_3$ are connected between each phase output from coupling inductors 14 and a common point. The three phase outputs from coupling inductors 14 are provided to, for example, three-phase motor 16. Although illustrated as providing power to three-phase motor 16, paralleled inverter 10 may be utilized in any power conversion system to provide power for any AC load.

Inverters 12a and 12b are configured in a parallel configuration and both receive input from the $V_{DC}$ bus. The $V_{DC}$ bus provides direct current (DC) power to parallel inverter 10 from any DC source such as, for example, an active rectifier. Inverters 12a and 12b may both be configured as two level inverters. For example, with reference to a mid-point of the DC bus, for output $V_{A1}$, switch $S_{1a}$ may be enabled to provide $+V_{DC}/2$ to output $V_{A1}$ (positive DC bus voltage) and switch $S_{1b}$ may be enabled to provide $-V_{DC}/2$ to output $V_{A1}$ (negative DC bus voltage). For output $V_{A2}$, switch $S_{2a}$

may be enabled to provide $+V_{DC}/2$ to output $V_{A2}$, and switch $S_{2b}$ may be enabled to provide $-V_{DC}/2$ to output $V_{A2}$. $V_{A1}$ and $V_{A2}$ are both provided to coupling inductor $L_1$, which provides a single output $V_A$ to three-phase motor 16, constrains circulation current, and filters DM noise. Circulation currents are currents that flow from inverter 12a into inverter 12b or vice versa, for example, a circulating current may flow from output $V_{A1}$ into output $V_{A2}$. The same operation is performed for the other outputs $V_B$ and $V_C$. The three outputs $V_A$, $V_B$, and $V_C$ are provided to motor 16.

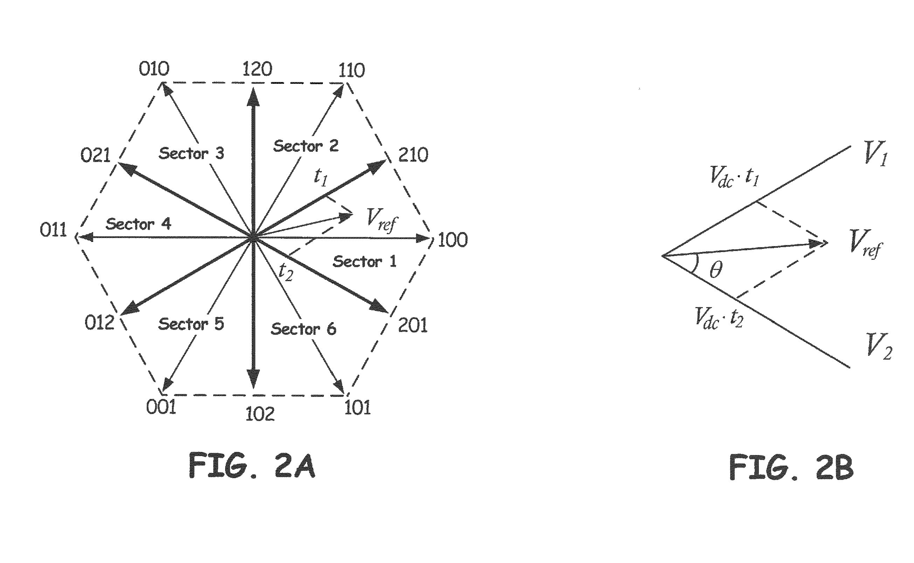

With continued reference to FIG. 1, FIGS 2A and 2B are vector diagrams illustrating control vectors for paralleled invertor 10. In space vector pulse-width modulation (SVPWM) control, a two-dimensional control vector is utilized to control the output voltage of paralleled inverter 10. The control vector ($V_{ref}$) is generated based upon the desired three-phase output ($V_A$, $V_B$ and $V_C$) of paralleled inverter 10. $V_{ref}$ may be generated using any desired method, such as converting a desired three-phase output ($V_A$, $V_B$, and $V_C$) into a two-dimensional DQ or $\alpha\beta$ reference frame using a Park and/or Clarke transformation. The resultant $V_{ref}$ control vector will fall into one of the six sectors shown in FIG. 2A. The transformation will also provide the angle $\theta$ of the position of $V_{ref}$.

In single two-stage inverters, the six unit vectors (0,0,1; 0,1,0; 0,1,1; 1,0,0; 1,0,1; and 1,1,0) as shown in FIG. 2A are utilized to control the inverter. For example, if the 0,1,0 unit vector is applied to inverter 12a, switches $S_{1b}$, $S_{1c}$, and $S_{1f}$ would be enabled to provide $-V_{DC}/2$ to the $V_{A1}$ output, $V_{DC}/2$ to the $V_{B1}$ output, and $-V_{DC}/2$ to the $V_{C1}$ output. Each of inverters 12a and 12b may be controlled utilizing these six single two-stage inverter unit vectors.

For paralleled inverter 10, six new unit vectors (1,0,2; 2,0,1; 2,1,0; 1,2,0; 0,2,1; and 0,1,2), as shown in FIG. 2A, may be utilized as combinations of adjacent single inverter unit vectors. For example, paralleled inverter unit vector 1,0,2 is formed through combination of single inverter unit vectors 0,0,1 and 1,0,1, and paralleled inverter unit vector 2,0,1 is formed through combination of single inverter unit vectors 1,0,1 and 1,0,0. For unit vector 2,0,1, for example, inverter 12a may be controlled using single inverter unit vector 1,0,1, and inverter 12b may be controlled using single inverter unit vector 1,0,0. Additionally, inverter 12a may be controlled using single inverter unit vector 1,0,0, and inverter 12b may be controlled using single inverter unit vector 1,0,1.

When controlled using the six new unit vectors (1,0,2; 2,0,1; 2,1,0; 1,2,0; 0,2,1; and 0,1,2), parallel inverter 10 produces zero or negligible CM voltage on outputs $V_A$-$V_C$. This negligible CM voltage may be, for example, less than one percent of $V_{DC}$. The following equation is used to calculate the CM voltage produced on outputs $V_A$-$V_C$:

$$V_{CM} = (1/3)(V_A + V_B + V_C) = (1/6)(V_{A1} + V_{A2} + V_{B1} + V_{B2} + V_{C1} + V_{C2}) \quad (1)$$

As seen in equation (1), with a single stage inverter, where each phase produces an output of either $+V_{DC}/2$ or $-V_{DC}/2$, there will be a nonzero CM voltage output due to the odd number of outputs. With parallel inverter 10 that includes six outputs, it is possible to eliminate the CM output due to the even number of outputs. The six new unit vectors always provide an output such that $V_{CM}$ is equal to zero. For example, if paralleled inverter 10 is controlled using unit vector 1,0,2, inverter 12a may be controlled with single inverter unit vector 0,0,1, and inverter 12b may be controlled with single inverter unit vector 1,0,1. In this case, switches $S_{1b}$, $S_{1d}$, $S_{1e}$, $S_{2a}$, $S_{2d}$, and $S_{2e}$ would be enabled providing zero volts on $V_A$, $-V_{DC}$ on $V_B$, and $+V_{DC}$ on $V_C$, which provides zero CM voltage between $V_A$, $V_B$, and $V_C$.

FIG. 2B illustrates a sample control vector $V_{ref}$ that is utilized to control inverters 12a and 12b to obtain a desired output ($V_A$, $V_B$, and $V_C$). In SVPWM control, a control vector is produced based upon a desired three-phase output ($V_A$, $V_B$, and $V_C$). The control vector may be generated using any method, such as a Park and/or Clarke transformation. The control vector will fall somewhere within the vector diagram shown in FIG. 2A. In FIGS. 2A and 2B, a sample control vector $V_{ref}$ is shown in Sector 1. For the sample control vector $V_{ref}$ shown in FIG. 2A, vector $V_1$ of FIG. 2B corresponds to new unit vector 2,1,0, and vector $V_2$ of FIG. 2B corresponds to new vector 2,0,1. The angle $\theta$ is the angle between new unit vector $V_2$ and control vector $V_{ref}$.

As shown in FIG. 2A, control vector $V_{ref}$ may be obtained by operating parallel inverter 10 utilizing unit vector 2,1,0 for a first time period $t_1$, and operating parallel inverter 10 utilizing unit vector 2,0,1 for a second time period $t_2$. Because $t_1$ and $t_2$ may not equal an entire switching period $T_S$, another time period, $t_0$, is determined for which the outputs $V_A$, $V_B$, and $V_C$ will all be zero. This is achieved by utilizing zero unit vectors 1,1,1 and 0,0,0, or vice versa, to control inverters 12a and 12b, respectively. The following equations may be utilized to determine values for $t_0$, $t_1$, and $t_2$ based upon the positive DC rail voltage $+V_{DC}$, the angle $\theta$, and the magnitude of the control vector $V_{ref}$.

$$\begin{cases} \dfrac{V_{dc} \cdot t_1}{\sin\theta} = \dfrac{V_{dc} \cdot t_2}{\sin(\dfrac{\pi}{3} - \theta)} = \dfrac{V_{ref} \cdot T_s}{\sin(\dfrac{2\pi}{3})} \\ t_0 = T_s - t_1 - t_2 \end{cases} \quad (2)$$

Following determination of $t_0$, $t_1$, and $t_2$, inverters 12a and 12b may be controlled to provide the desired output indicated by control vector $V_{ref}$. The switching period $T_S$ may be split into two half cycles. Each half cycle may include half of each of $t_0$, $t_1$ and $t_2$. For example, the progression for each cycle may be $t_0/4$, $t_1/2$, $t_2/2$, $t_0/2$, $t_1/2$, $t_2/2$, and $t_0/4$. For example, if paralleled inverter 10 is controlled using unit vector 1,2,0 for period $t_1$, then inverter 12a may be controlled with single inverter unit vector 0,1,0 and inverter 12b may be controlled with single inverter unit vector 1,1,0 for the first half of period $t_1$. For the second half of period $t_1$, inverter 12a may be controlled with single inverter unit vector 1,1,0 and inverter 12b may be controlled with single inverter unit vector 0,1,0. This provides balance for each switching cycle $T_S$, which balances the circulating current through paralleled inverter 10 which may then be easily limited by coupling inductors 14.

Based upon the sector in which $V_{ref}$ is located, the following tables may be utilized to determine the desired control of inverters 12a and 12b for a given switching cycle $T_S$.

Table 1

| Sector One | Inverter 12a | Inverter 12b |
|---|---|---|
| $t_0/4$ | 1,1,1 | 0,0,0 |
| $t_1/2$ | 1,1,0 | 1,0,0 |
| $t_2/2$ | 1,0,0 | 1,0,1 |
| $t_0/2$ | 0,0,0 | 1,1,1 |
| $t_1/2$ | 1,0,0 | 1,1,0 |
| $t_2/2$ | 1,0,1 | 1,0,0 |
| $t_0/4$ | 1,1,1 | 0,0,0 |

Table 2

| Sector Two | Inverter 12a | Inverter 12b |
|---|---|---|
| $t_0/4$ | 1,1,1 | 0,0,0 |
| $t_1/2$ | 1,1,0 | 0,1,0 |
| $t_2/2$ | 1,0,0 | 1,1,0 |
| $t_0/2$ | 0,0,0 | 1,1,1 |
| $t_1/2$ | 0,1,0 | 1,1,0 |
| $t_2/2$ | 1,1,0 | 1,0,0 |
| $t_0/4$ | 1,1,1 | 0,0,0 |

Table 3

| Sector Three | Inverter 12a | Inverter 12b |
|---|---|---|
| $t_0/4$ | 1,1,1 | 0,0,0 |
| $t_1/2$ | 0,1,1 | 0,1,0 |
| $t_2/2$ | 0,1,0 | 1,1,0 |
| $t_0/2$ | 0,0,0 | 1,1,1 |
| $t_1/2$ | 0,1,0 | 0,1,1 |
| $t_2/2$ | 1,1,0 | 0,1,0 |
| $t_0/4$ | 1,1,1 | 0,0,0 |

Table 4

| Sector Four | Inverter 12a | Inverter 12b |
|---|---|---|
| $t_0/4$ | 1,1,1 | 0,0,0 |
| $t_1/2$ | 0,1,1 | 0,0,1 |
| $t_2/2$ | 0,1,0 | 0,1,1 |
| $t_0/2$ | 0,0,0 | 1,1,1 |
| $t_1/2$ | 0,0,1 | 0,1,1 |
| $t_2/2$ | 0,1,1 | 0,1,0 |
| $t_0/4$ | 1,1,1 | 0,0,0 |

Table 5

| Sector Five | Inverter 12a | Inverter 12b |
|---|---|---|
| $t_0/4$ | 1,1,1 | 0,0,0 |
| $t_1/2$ | 1,0,1 | 0,0,1 |
| $t_2/2$ | 0,0,1 | 0,1,1 |
| $t_0/2$ | 0,0,0 | 1,1,1 |
| $t_1/2$ | 0,0,1 | 1,0,1 |
| $t_2/2$ | 0,1,1 | 0,0,1 |
| $t_0/4$ | 1,1,1 | 0,0,0 |

Table 6

| Sector Six | Inverter 12a | Inverter 12b |
|---|---|---|
| $t_0/4$ | 1,1,1 | 0,0,0 |
| $t_1/2$ | 1,0,1 | 1,0,0 |
| $t_2/2$ | 0,0,1 | 1,0,1 |
| $t_0/2$ | 0,0,0 | 1,1,1 |
| $t_1/2$ | 1,0,0 | 1,0,1 |
| $t_2/2$ | 1,0,1 | 0,0,1 |
| $t_0/4$ | 1,1,1 | 0,0,0 |

As shown in Tables 1-6, each phase of each inverter 12a and 12b only changes state twice each switching cycle (i.e. from a '0' to a '1' or from a '1' to a '0'). In past SVPWM controlled two-level inverters, the sequence progressed $t_0/4$, $t_1/2$, $t_2/2$, $t_0/2$, $t_2/2$, $t_1/2$, and $t_0/4$ for symmetry in each half of the switching cycle ($T_S/2$). With paralleled inverter 10 producing no CM output voltage, each half of the switching cycle does not need to be symmetric, and the sequence may progress as shown in Tables 1-6 to achieve minimum switching events for each phase of paralleled inverter 10.

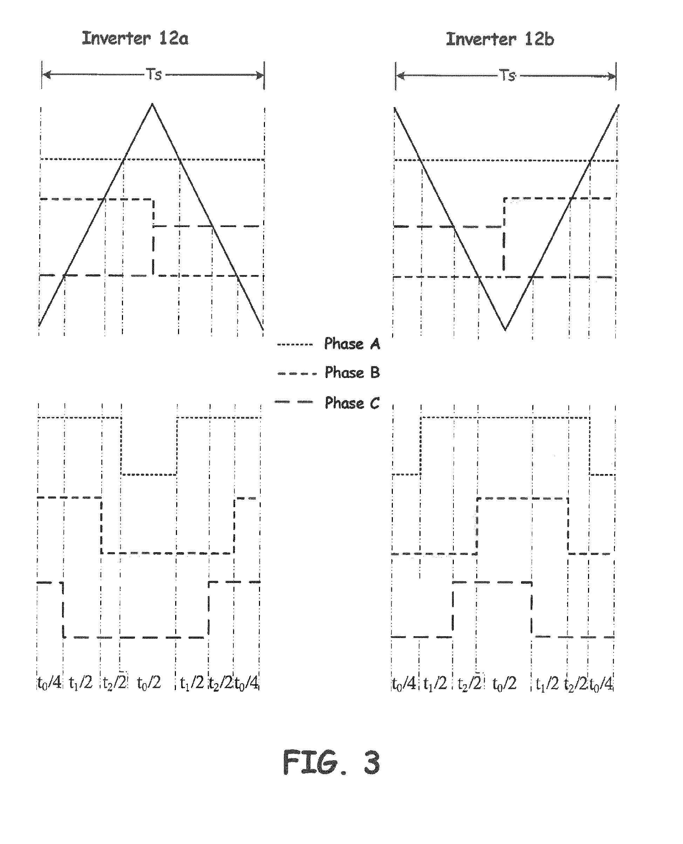

With continued reference to FIG. 1 and FIGS. 2A and 2B, FIG. 3 a chart illustrating control waveforms in a switching cycle ($T_S$) for a paralleled invertor that produces a zero CM voltage output in sector 1 (Table 1). The top waveform illustrates comparator waveforms and a triangle-wave carrier signal. The waveforms shown in FIG. 3 are for a control vector $V_{ref}$ in sector one as illustrated in FIG. 2A. Because the two half cycles of $T_S$ are not symmetrical, some of the comparator signals include a step up or down at the half cycle. The comparator signals may be utilized to generate the control signals for each of inverters 12a and 12b. The comparator signals shown in FIG. 3 are compared to the triangle-wave carrier signal to generate a control signal for each phase. The control signals are illustrated in the bottom waveform of FIG. 3 and correspond to the values shown in Table 1. For control vectors that fall in the other sectors,

6

comparator signals will be generated that will be utilized to generate the control signals indicated in a respective Table 2-6.

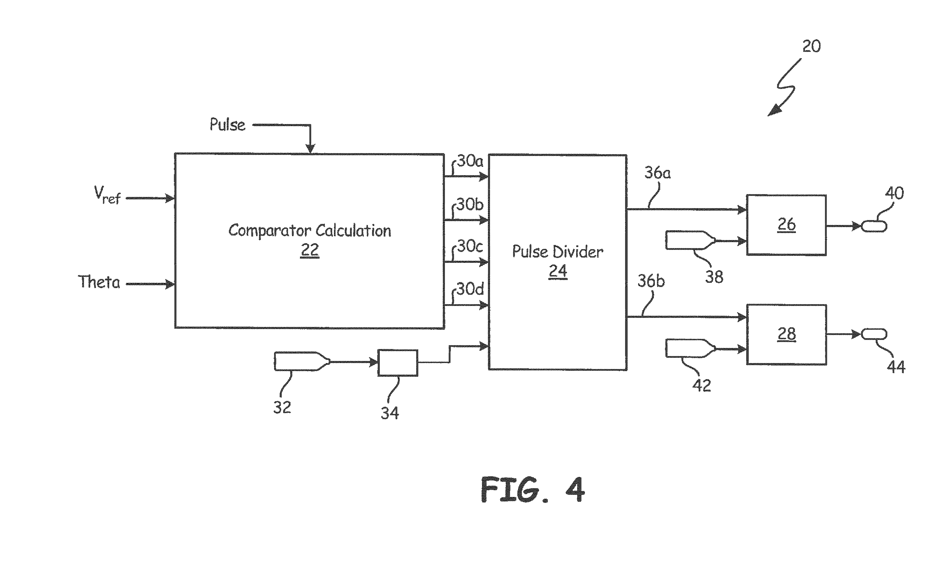

With continued reference to FIGS. 1-3, FIG. 4 is a block diagram illustrating a controller 20 for paralleled inverter 10. Control system 20 includes comparator calculator 22, pulse divider 24, and PWM calculators 26 and 28. Comparator calculator 22 provides outputs 30a-30d to pulse divider 24. Pulse divider 24 receives input from triangle-wave carrier input 32 through derivative module 34. Pulse divider 24 provides output 36a to PWM calculator 26 and provides output 36b to PWM calculator 28. PWM calculator 26 receives input from triangle-wave carrier input 38 and provides PWM output 40. PWM calculator 28 receives input from triangle-wave carrier input 42 and provides PWM output 44. Control system 20 may be implemented as any electronic system capable of providing control signals for inverters 12a and 12b. Control system 20 may be, for example, implemented in software and run on a microprocessor, may be implemented as discrete electronic components, or as any other electronic system.

Comparator 22 receives a control vector $V_{ref}$ and angle $\theta$ from, for example, a separate controller, or the same controller that implements control system 20. Comparator 22 determines values for $t_0$, $t_1$ and $t_2$ using, for example, equation (2). Following determination of $t_0$, $t_1$, and $t_2$, based upon the sector in which $V_{ref}$ falls, comparator 22 produces the comparator signals illustrated in FIG. 3, based upon the respective tables 1-6. Comparator 22 generates a first set of comparator values 30a for inverter 12a, a second set of comparator values 30b for inverter 12a, a first set of comparator values 30c for inverter 12b, and a second set of comparator values 30d for inverter 12b. The first set for each of inverters 12a and 12b are comparator values for a first half cycle of a switching period $T_S$, and the second set for each of inverters 12a and 12b are comparator values for a second half cycle of the switching period $T_S$.

Pulse divider 24 receives the four sets of comparator values 30a-30d and also receives an input from derivative module 34. The input is indicative of a change in triangle carrier wave input 32. In this way, pulse divider 24 is able to determine the present half cycle of $T_S$. Based upon the present half cycle of TS, pulse divider 24 provides the respective comparator signals to PWM calculators 26 and 28. PWM calculator 26 compares the comparator signals with a triangle-wave carrier input signal from input 38 and PWM calculator 28 compares the comparator signals with a triangle-wave carrier input signal from input 42. This comparison is illustrated in FIG. 3. PWM calculator 26 provides control signals (shown in FIG. 3) for inverter 12a on PWM output 40 based upon the comparison, and PWM calculator 28 provides control signals (shown in FIG. 3) for inverter 12b on PWM output 44 based upon the comparison. PWM calculators 26 and 28 may be implemented as any circuit capable of comparing two values and may be implemented as electronic comparators, or in software.

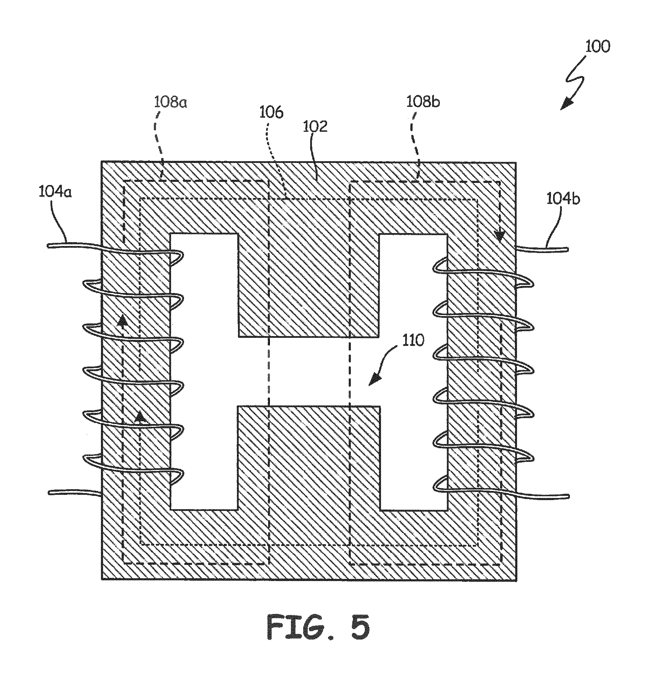

With continued reference to FIGS. 1-4, FIG. 5 is a schematic diagram illustrating coupling inductor 100 for use in coupling inductors 14 (FIG. 1) at the output of paralleled invertor 10 (FIG. 1). Inductor 100 includes core 102 and windings 104a and 104b. Coupling inductor flux path 106 and leakage inductor flux paths 108a and 108b. As illustrated in FIG. 5, core 102 may be two 'E' cores with an air gap 110 in the central leg.

Windings 104a and 104b are wound around opposing legs, in inversed directions. For example, a positive current through winding 104a will flow in the opposite direction of a positive current in winding 104b. Winding 104a may be connected to one of the phase outputs ($V_{A1}$, $V_{B1}$, $V_{C1}$) of inverter 12a, and winding 104b may be connected to one of the phase outputs ($V_{A2}$, $V_{B2}$, $V_{C2}$) of inverter 12b. The outputs of windings 104a and 104b may be connected to form primary outputs ($V_A$, $V_B$, $V_C$) provided to motor 16.

Flux path 106 shows the coupling inductor flux, which flows through the path that does not include air gap 110. Flux paths 108a and 108b illustrate the leakage inductor flux, which flows through air gap 110. Coupling inductor flux 106 is generated by the circulating current between inverters 12a and 12b, and is utilized to limit this circulating current. Leakage inductor flux 108a and 108b is generated by the output current from inverters 12a and 12b, and this inductance is used to filter DM noise. Using coupling inductor 100, the density of coupling inductors $L_1$-$L_3$ (FIG. 1) can be high and can perform as both a DM filter as well as a circulating current control.

By utilizing paralleled inverter 10 with coupling inductors 14 and capacitors $C_1$-$C_3$, a power conversion system may be implemented that produces negligible CM voltage. Because of this, prior art CM chokes and CM capacitors may be eliminated from the circuit, which greatly improves the power density of the system. By eliminating CM output of paralleled inverter 10, the CM current received by motor 16 is greatly reduced, which protects the insulation and bearings of motor 16, and may increase the life span and reliability of motor 16. Eliminating the CM voltage may also limit output current ripple, odd harmonics of the switching frequency, and DC capacitor ripple currents. Paralleled inverter 10 also provides fault-tolerant control in that the system may still function upon failure of one of inverters 12a or 12b.

**Discussion of Possible Embodiments**

The following are non-exclusive descriptions of possible embodiments of the present invention.

A power conversion system includes a paralleled inverter and a plurality of coupling inductors. The paralleled inverter is configured to convert a direct current input into an alternating current output and includes a first inverter having a first plurality of phase outputs and a second inverter having a second plurality of phase outputs. The plurality of coupling inductors connect one of the first plurality of phase outputs with one of the second phase outputs to filter differential-mode electromagnetic interference and circulation current.

A further embodiment of the foregoing system, wherein the plurality of coupling inductors includes a first coupling inductor connected to a first output of the first plurality of phase outputs and a first output of the second phase outputs, the first coupling inductor providing a first primary output, a second coupling inductor connected to a second output of the first plurality of phase outputs and a second output of the second phase outputs, the second coupling inductor providing a second primary output, and a third coupling inductor connected to a third output of the first plurality of phase outputs and a third output of the second phase outputs, the third coupling inductor providing a third primary output.

A further embodiment of any of the foregoing systems, further including a first capacitor connected between the first primary output and a midpoint, a second capacitor connected between the second primary output and the midpoint, and a third capacitor connected between the third primary output and the midpoint, wherein the first capacitor, the second capacitor, and the third capacitor filter differential-mode noise on the first primary output, the second primary output, and the third primary output.

A further embodiment of any of the foregoing systems, wherein the alternating current output is provided to an alternating current load.

A further embodiment of any of the foregoing systems, wherein each of the plurality of coupling inductors includes a core having a first leg, an opposing second leg, and a central air gap, a first coil wound around the first leg that receives a first current, and a second coil wound around the second leg that receives a second current, wherein a flux direction generated by the second current is received in an opposite direction of a flux direction generated by the first current.

A further embodiment of any of the foregoing systems, wherein the core of each of the plurality of coupling inductors comprises a pair of 'E' cores.

A further embodiment of any of the foregoing systems, wherein each of the plurality of coupling inductors utilizes a coupling inductor flux generated in the core by the first and second currents to limit a circulation current in the paralleled inverter.

A further embodiment of any of the foregoing systems, wherein each of the plurality of coupling inductors utilizes a leakage inductor flux generated in the core by the first and second currents to filter differential-mode noise in the paralleled inverter.

A further embodiment of any of the foregoing systems, wherein the first current is received from one of the first plurality of phase outputs and the second current is received from one of the second plurality of phase outputs.

A further embodiment of any of the foregoing systems, further comprising a controller that controls the paralleled converter to produce negligible common-mode voltage.

A method of filtering differential-mode noise from a paralleled inverter, the method including providing a first plurality of outputs from a first inverter of the paralleled inverter to a plurality of coupling inductors, providing a second plurality of outputs from a second inverter of the paralleled inverter to the plurality of coupling inductors, and filtering, using the plurality of coupling inductors, the differential-mode noise from the paralleled inverter.

A further embodiment of the foregoing method, further including controlling, using a controller, the paralleled inverter to generate negligible common-mode voltage.

A further embodiment of any of the foregoing methods, further including providing power on a plurality of primary outputs from the plurality of coupling inductors to drive an alternating current load.

A further embodiment of any of the foregoing methods, further including filtering, using a capacitor circuit, the differential-mode noise on the plurality of primary outputs.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A power conversion system comprising:

   a paralleled inverter (10) configured to convert a direct current input into an alternating current output, wherein the paralleled inverter (10) includes a first inverter (12a) having a first plurality of phase outputs and a second inverter (12b) having a second plurality of phase outputs; and
   a plurality of coupling inductors (14), wherein each of the plurality of coupling inductors connects one of the first plurality of phase outputs with one of the second phase outputs to filter differential-mode electromagnetic interference and circulation current.

2. The power conversion system of claim 1, wherein the plurality of coupling inductors (14) comprises:

a first coupling inductor ($L_1$) connected to a first output of the first plurality of phase outputs and a first output of the second phase outputs, the first coupling inductor providing a first primary output; a second coupling inductor ($L_2$) connected to a second output of the first plurality of phase outputs and a second output of the second phase outputs, the second coupling inductor providing a second primary output; and a third coupling inductor ($L_3$) connected to a third output of the first plurality of phase outputs and a third output of the second phase outputs, the third coupling inductor providing a third primary output.

3. The power conversion system of claim 2, further comprising:

a first capacitor ($C_1$) connected between the first primary output and a midpoint; a second capacitor ($C_2$) connected between the second primary output and the midpoint; and a third capacitor ($C_3$) connected between the third primary output and the midpoint, wherein the first capacitor, the second capacitor, and the third capacitor filter differential-mode noise on the first primary output, the second primary output, and the third primary output.

4. The power conversion system of claim 2, wherein the alternating current output is provided to an alternating current load.

5. The power conversion system of claim 1, wherein each of the plurality of coupling inductors (14) comprises:

a core (102) having a first leg, an opposing second leg, and a central air gap (110); a first coil (104a) wound around the first leg that receives a first current; and a second coil (104b) wound around the second leg that receives a second current, wherein a flux direction generated by the second current is received in an opposite direction of a flux direction generated by the first current.

6. The power conversion system of claim 5, wherein the core of each of the plurality of coupling inductors (14) comprises a pair of 'E' cores.

7. The power conversion system of claim 5, wherein each of the plurality of coupling inductors (14) utilizes a coupling inductor flux generated in the core by the first and second currents to limit a circulation current in the paralleled inverter.

8. The power conversion system of claim 5, wherein each of the plurality of coupling inductors (14) utilizes a leakage inductor flux generated in the core by the first and second currents to filter differential-mode noise in the paralleled inverter.

9. The power conversion system of claim 5, wherein the first current is received from one of the first plurality of phase outputs and the second current is received from one of the second plurality of phase outputs.

10. The power conversion system of claim 1, further comprising a controller that controls the paralleled converter to produce negligible common-mode voltage.

11. A method of filtering differential-mode noise from a paralleled inverter (10), the method comprising:

providing a first plurality of outputs from a first inverter of the paralleled inverter to a plurality of coupling inductors (14); providing a second plurality of outputs from a second inverter of the paralleled inverter to the plurality of coupling inductors (14); and filtering, using the plurality of coupling inductors (14), the differential-mode noise from the paralleled inverter.

12. The method of claim 11, further comprising controlling, using a controller, the paralleled inverter to generate negligible common-mode voltage.

13. The method of claim 11, further comprising providing power on a plurality of primary outputs from the plurality of coupling inductors to drive an alternating current load.

14. The method of claim 13, further comprising filtering, using a capacitor circuit, the differential-mode noise on the plurality of primary outputs.

FIG. 1

**FIG. 2B**

**FIG. 2A**

Inverter 12a

Inverter 12b

------- Phase A

----- Phase B

— — Phase C

$t_0/4$  $t_1/2$  $t_2/2$  $t_0/2$  $t_1/2$  $t_2/2$ $t_0/4$

$t_0/4$  $t_1/2$  $t_2/2$  $t_0/2$  $t_1/2$  $t_2/2$ $t_0/4$

FIG. 3

FIG. 4

EP 2 950 434 A1

FIG. 5

Europäisches
Patentamt

European
Patent Office

Office européen
des brevets

# EUROPEAN SEARCH REPORT

Application Number

EP 15 16 9118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/299311 A1 (ZHU HUIBIN [US] ET AL) 8 December 2011 (2011-12-08) | 1-4,7,9, 11,13,14 | INV. H02M1/12 H02M7/493 |
| Y | * abstract; figure 3 * * paragraphs [0001] - [0003], [0012], [0013], [0030] - [0035] * ----- | 5,6,10, 12 | ADD. H02M1/00 |
| X | DI ZHANG ET AL: "Total Flux Minimization Control for Integrated Inter-Phase Inductors in Paralleled, Interleaved Three-Phase Two-Level Voltage-Source Converters With Discontinuous Space-Vector Modulation", IEEE TRANSACTIONS ON POWER ELECTRONICS, INSTITUTE OF ELECTRICAL AND ELECTRONICS ENGINEERS, USA, vol. 27, no. 4, 1 April 2012 (2012-04-01), pages 1679-1688, XP011422919, ISSN: 0885-8993, DOI: 10.1109/TPEL.2011.2169281 | 1-9,11, 13,14 | |
| Y | * figures 3,5,6 * * Section II * ----- | 5,6,10, 12 | TECHNICAL FIELDS SEARCHED (IPC) |
| Y | ZHIHONG YE ET AL: "Paralleling non-isolated multi-phase PWM converters", INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 4, 8 October 2000 (2000-10-08), pages 2433-2439, XP010522596, ISBN: 978-0-7803-6401-1 * figures 1,11 * * Section III 3. * ----- | 10,12 | H02M |

-/--

The present search report has been drawn up for all claims

| Place of search | Date of completion of the search | Examiner |
|---|---|---|
| The Hague | 19 October 2015 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                           

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 15 16 9118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOILLAT D O ET AL: "Modeling and experimental analysis of a Coupling Inductor employed in a high performance AC power source", RENEWABLE ENERGY RESEARCH AND APPLICATIONS (ICRERA), 2012 INTERNATIONAL CONFERENCE ON, IEEE, 11 November 2012 (2012-11-11), pages 1-18, XP032440255, DOI: 10.1109/ICRERA.2012.6477401 ISBN: 978-1-4673-2328-4 * figures 1,6,7 * | 1,2,4,9, 11,13,14 | |

TECHNICAL FIELDS
SEARCHED (IPC)

The present search report has been drawn up for all claims

| Place of search | Date of completion of the search | Examiner |
|---|---|---|
| The Hague | 19 October 2015 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 15 16 9118

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2015

| Patent document cited in search report | Publication date | Patent family member(s) | Publication date |
|---|---|---|---|
| US 2011299311 A1 | 08-12-2011 | EP 2466735 A2 <br> US 2011299311 A1 | 20-06-2012 <br> 08-12-2011 |

EPO FORM P0459